(19) 

Europäisches
Patentamt
European
Patent Office
Office européen
des brevets

(11) **EP 4 202 589 B1**

(12) **EUROPEAN PATENT SPECIFICATION**

(45) Date of publication and mention
of the grant of the patent:
**03.07.2024 Bulletin 2024/27**

(21) Application number: **21217504.6**

(22) Date of filing: **23.12.2021**

(51) International Patent Classification (IPC):
*G05D 1/00* *(2024.01)*

(52) Cooperative Patent Classification (CPC):
**G05D 1/2297; G05D 1/644;** G05D 2105/28;
G05D 2107/73; G05D 2107/84; G05D 2109/10

(54) **GENERATING REFERENCE TRAJECTORIES FOR VEHICLES IN CONFINED AREAS**

ERZEUGUNG VON REFERENZTRAJEKTORIEN FÜR FAHRZEUGE IN BEGRENZTEN BEREICHEN

GÉNÉRATION DE TRAJECTOIRES DE RÉFÉRENCE POUR VÉHICULES DANS DES ZONES
CONFINÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.06.2023 Bulletin 2023/26**

(60) Divisional application:
**24175864.8**

(73) Proprietor: **Volvo Autonomous Solutions AB
405 08 Göteborg (SE)**

(72) Inventors:
• **HULT, Robert
423 46 Torslanda (SE)**
• **LJUNGQVIST, Oskar
511 99 Sätila (SE)**

(74) Representative: **Zacco Sweden AB
P.O. Box 5581
Löjtnantsgatan 21
114 85 Stockholm (SE)**

(56) References cited:
**US-A1- 2018 284 768    US-A1- 2019 265 714
US-B1- 10 671 075**

**Description**

TECHNICAL FIELD

The present disclosure relates to a method for generating a set of one or more candidate reference trajectories (x(t),u(t)) for navigating a vehicle, for example, an automated vehicle and to various related aspects. Examples of automated vehicles include autonomous, semi-autonomous, and remote-controlled vehicle.

In particular, but not exclusively the disclosed technology relates to a method which can be used to navigation one or more automated vehicles in a confined area, for example, within a mining site, logistics centre or port.

This is particularly useful for automated vehicles which are autonomous or semi-autonomous where automated denotes a wider set of functionality. For example, a driverless vehicle that is "limited ability to form decisions on its own" and only can follow a pre-recorded track using a single positioning sensor is automated but arguably not autonomous. In contrast, a vehicle that can decide to, for example, take another route, based on a larger sensor set without user input is arguably (more) autonomous. The disclosed invention will be described mainly with respect to vehicles, however, such vehicles may include heavy-duty vehicles, such as semitrailer vehicles and trucks as well as other types of vehicles such as cars

BACKGROUND

In a confined, in other words, closed, environments, examples of which include areas such as mines and harbours, one or more automated vehicles (for example, construction machines , trucks, and trucks with trailers or semitrailers) may be used for transportation.

One of the tasks that such automated vehicles need to perform is to follow recorded trajectories (i.e., "references") on one or more pre-specified static routes in the material flow around the confined area or environment. Such reference trajectories usually comprise recordings which are constructed by a human operator. Human generated reference trajectories are time consuming to obtain and may suffer from poor quality raw data. Raw reference trajectory data, for example, may include noise in the form of trajectory disturbances, undesirable motion pauses and/or other types of unwanted artefacts in the trajectory data related to, for example, the specifics of the person driving at the time of recording, sensor noise and environment conditions. Known techniques to remove such noise from the reference trajectory data-sets and clean the data are both time- and resource-consuming processes. Moreover, known reference trajectory generating techniques produce static trajectories where the same route is established for use in a variety of weather conditions and seasons, possibly with a variety of different vehicles (e.g., a hauler or a truck-trailer) and configurations (e.g., trailers of different dimensions). To change a static reference trajectory, a human operator must generate additional recordings of data points.

US patent US10671075 discloses a trajectory for an autonomous vehicle (AV) which can be generated using curvature segments. A decision planner component can receive a reference trajectory for the AV to follow in an environment. A number of subdivisions (frames) of the reference trajectory may be associated with a curvature value and a tangent vector. Starting with an initial position of the AV, a candidate trajectory can be determined by continuously intersecting a segment with an origin at the initial position of the AV and a reference line associated with a particular frame. The reference line can be substantially perpendicular to the tangent vector of the particular frame. A location of the intersection between the segment and the reference line can be based on a curvature value of the segment. Optimizing a candidate trajectory can include varying curvature values associated with various segments and determining costs of the various candidate trajectories.

US patent application US2018/284768 discloses systems and methods that control the motion of an autonomous vehicle by rewarding or otherwise encouraging progress toward a goal, rather than simply rewarding distance travelled. In particular, the systems and methods of the present disclosure can project a candidate motion plan that describes a proposed motion path for the autonomous vehicle onto a nominal pathway to determine a projected distance associated with the candidate motion plan. The systems and methods of the present disclosure can use the projected distance to evaluate a reward function that provides a reward that is positively correlated to the magnitude of the projected distance. The motion of the vehicle can be controlled based on the reward value provided by the reward function. For example, the candidate motion plan can be selected for implementation or revised based at least in part on the determined reward value.

US patent application US 2019/265714 entitled systems and methods for enhanced collision avoidance on logistics ground support equipment using multi-sensor detection fusion discloses enhanced systems and methods for collision avoidance of a high value asset with reflective beacons around it using multi-sensor data fusion on a mobile industrial vehicle. The system has a sensing processing system with a LiDAR and camera sensors, and a multi-processor module responsive to the different sensors. The sensing processing system fuses the different sensor data to locate the reflective beacons. A model predictive controller on the vehicle determines possible control solutions where each defines a threshold allowable speed for the vehicle at discrete moments based upon an estimated path to a breaching point projected from the reflective beacons, and then identifies an optimal one of the control solutions based upon a performance cost function and associated with an optimal threshold allowable speed. The system has a vehicle actuator configured to respond and alter vehicle movement to avoid a collision when the vehicle exceeds the optimal threshold allowable speed.

The disclosed technology seeks to mitigate, obviate, alleviate, or eliminate various issues known in the art which affect reference trajectory generation, such as, for example, those mentioned above.

SUMMARY STATEMENTS

Whilst the invention is defined by the accompanying claims, various aspects of the disclosed technology including the claimed technology are set out in this summary section with examples of some preferred embodiments and indications of possible technical benefits.

A first aspect of the disclosed technology comprises a computer-implemented method for optimizing a reference trajectory for a vehicle having an advanced driving system, ADS, operating in a confined area, the reference trajectory comprising on a sequence of reference data points. The method comprises determining a projection of the sequence of reference data points for fitting the sequence of reference data points onto a candidate reference trajectory, where the projection smooths the fit of the sequence of reference data to a set of data points forming the candidate reference trajectory subject to one or more constraints, quantifying a performance of at least one vehicle task to be performed by the vehicle along the reference trajectory in a simulation of the candidate trajectory, and optimizing the quantified performance to obtain an optimal reference trajectory for the vehicle in the confined area.

Advantageously the method can modify recorded reference trajectories accordingly on demand without the need for additional reference recordings by a human operator.

Advantageously, the method may reduce site-setup and/or maintenance cost, which may increase uptime and productivity. Consequently, the method has the potential to improve the overall performance of an automated vehicle fleet operating within a confined area.

In some embodiments, the vehicle is an automated vehicle including an ADS.

In some embodiments, the automated vehicle comprises an autonomous or semi-autonomous vehicle.

In some embodiments of the method, the one or more constraints include one or more of a set of vehicle characteristics, site conditions of the confined area, and environmental conditions of the confined area.

In some embodiments of the method, the set of vehicle characteristics comprise one or more characteristics representing a vehicle type, a minimum turning circle of the vehicle, a fuel storage capacity of the vehicle, a vehicle weight, a dimension of the vehicle, a dimension of any trailer attached to the vehicle.

In some embodiments of the method, a site condition includes a ground condition along the candidate reference trajectory.

In some embodiments of the method, applying the constraints smooths the fit of the candidate trajectory reference data to the sequence of reference data points subject to constraints based on a given type of vehicle operating in the confined area having at least one task objective whilst travelling along the optimized trajectory.

In some embodiments of the method, the reference data points represent a recorded trajectory in the confined area.

In some embodiments of the method, the optimization associates additional vehicle pose information with each recorded trajectory data point which is fitted to the optimal reference trajectory for the vehicle by the projection

In some embodiments of the method, the reference data points are generated by drawing a trajectory on a map of the confined area.

In some embodiments of the method, the vehicle is an articulated vehicle.

In some embodiments of the method, the method optimizes the performance of a plurality of candidate reference trajectories for the automated vehicle when it is operating in the confined area by optimizing the performance and constraining the end-points of the plurality of candidate trajectories so that at least one endpoint of one of the plurality of candidate trajectories matches in time and in position at least one end-point of another candidate trajectory of the plurality of quantified trajectories

In some embodiments of the method, the method optimizes all of the quantified reference trajectory of the vehicle in the site simultaneously.

In some embodiments of the method, the method quantifies the plurality of reference trajectories by optimizing the performance of each trajectory individually and then optimizing the end points of each individually optimized trajectory to match in time and position.

In some embodiments of the method, the sequence of reference data points comprises a first data set of data points associated with a vehicle-specific position trace recorded within the confined area, and the set of data points forming the candidate reference trajectory comprises a set of calculated data points obtained by using a plurality of discrete numerical projection operations to associate each data point of the recorded trajectory forming the first data set with its closest calculated point on the candidate reference trajectory, and the method further comprises modifying the candidate reference trajectory within the confined geographical area based on the constructed second data set.

Another, second, aspect of the disclosed technology comprises a control system or circuitry for a vehicle having an automated driving system, ADS, the control system or circuitry comprising memory, one or more processors or processing circuitry, and computer-program code which, when loaded from memory and executed by the one or more processors causes the control system to implement a method according the first aspect. The control system is further configured to generate one or more actuator signals to guide the vehicle along the optimized reference trajectory.

Another, third aspect of the disclosed technology comprises a computer program product configured to be used by a device mounted on or integrated in a vehicle having an automated driving system, wherein the computer program product comprises computer-code which when loaded from memory and executed by one or more processors or processing circuitry of a control system of the vehicle, causes the vehicle to implement a method according to the first aspect. A fourth aspect of the invention comprises a computer-readable storage medium comprising computer-program code which, when executed by one or more processors or processing circuitry of a control system of a vehicle having an automated driving system, causes the vehicle to implement a method according to the first aspect.

A fifth aspect of the disclosed technology comprises a computer program carrier carrying a computer program comprising computer-program code, which, when loaded from the computer program carrier and executed by one or more processors or processing circuitry of a vehicle having an automated driving system, causes the vehicle to implement a method according to the first aspect, wherein the computer program carrier is one of an electronic signal, optical signal, radio signal or computer-readable storage medium.

The disclosed aspects and embodiments may be combined with each other in any suitable manner which would be apparent to someone of ordinary skill in the art.

## BRIEF DESCRIPTION OF THE DRAWINGS

Some embodiments of the disclosed technology are described below with reference to the accompanying drawings which are by way of example only and in which:

Figure 1 schematically illustrates a reference trajectory and a sequence of data points according to some embodiments of the disclosed technology;

Figure 2 schematically illustrates a projection operation according to some embodiments of the disclosed technology;

Figure 3 schematically illustrates how a continuous function x(t) is recreated according to some embodiments of the disclosed technology;

Figures 4A to 4C illustrate schematically a discrete projection operation according to some embodiments of the disclosed technology;

Figure 5 illustrates schematically an example software architecture providing a functional implementation a method of generating a reference trajectory for an automated vehicle in a confined area according to some embodiments of the disclosed technology;

Figure 6 illustrates schematically an example method of generating a reference trajectory for an automated vehicle in a confined area according to some embodiments of the disclosed technology; and

Figure 7 illustrates schematically an example of a control unit of an automated vehicle configured to follow a trajectory optimized using an embodiment of the disclosed methods.

## DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Steps, whether explicitly referred to a such or if implicit, may be re-ordered or omitted if not essential to some of the disclosed embodiments. Like numbers in the drawings refer to like elements throughout.

In some examples of the disclosed embodiments, trajectories followed are cyclical, in the sense that a vehicle repeatedly follows the trajectory. The vehicle movement is not necessarily continuous along a repeated trajectory. For example, in a confined environment wherein automated vehicles are heavy-duty vehicles such as construction machines or trucks with semitrailers such as those used to transport goods and the like around a closed site like a mine or construction site, the trajectories the vehicles follow may require stops to pick up goods to transport and to off load goods. When following such a repeated or cyclical trajectory, a vehicle may receive or collect goods at one or more locations on a trajectory and transport the goods from that location along a trajectory before dropping or dispersing the goods at one or more other points on the trajectory before repeating the trajectory by returning to the first location where it collects goods.

In some embodiments, a vehicle may have a number of tasks assigned to it, and on a site where a number of vehicles are operating in an autonomous, semi-autonomous or otherwise automated manner, each vehicle may be provided with a different set of tasks to perform, with one task in each set of tasks being to follow an assigned repeated or cyclical trajectory.

It is known to use pre-recorded trajectory or reference trajectory along one or more pre-specified static routes in the material flow around the closed site which are generated by recording one or more trajectories constructed by monitoring the trajectory of a vehicle when it has a human operator. However, trajectory recording of a vehicle operated by a human is not only time consuming to obtain but often results in the recorded trajectory containing disturbances related to specific characteristics of the vehicle driver of the test vehicle whose trajectory is generating the recording. Other factors which may affect the quality of a recording of a trajectory taken by a human driven vehicle around a site include sensor noise and environmental conditions, for example, heavy rain may lead to mud, which could also be undesirable and/or introduce errors into the recorded trajectory.

It is accordingly desirable to obtain a reference trajectory which can be followed by an automated vehicle in a variety of weather conditions and seasons. In addition, a reference trajectory which may be suitable for one vehicle, for example, may not be suitable for another due to vehicle characteristics such as weight, minimum turning circle, dimensions, whether the vehicle is articulated or not, in other words, whether a cab or tractor is coupled to one or more trailers or not, the dimensions of a vehicle.

As vehicles may need to be replaced at short notice on a site, for example, if one type of vehicle breaks down, it is also helpful if recorded trajectories can be modified on demand without the need for additional recordings by a human operator so as to be adapted for a vehicle with a different set of characteristics than the vehicle used to generate the recorded trajectory.

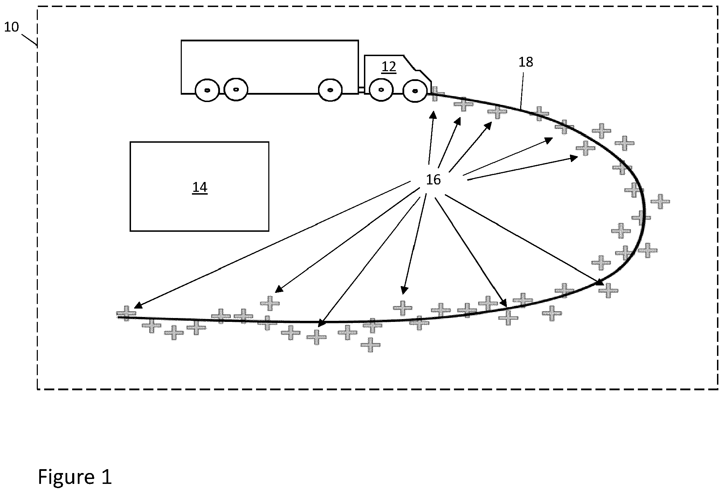

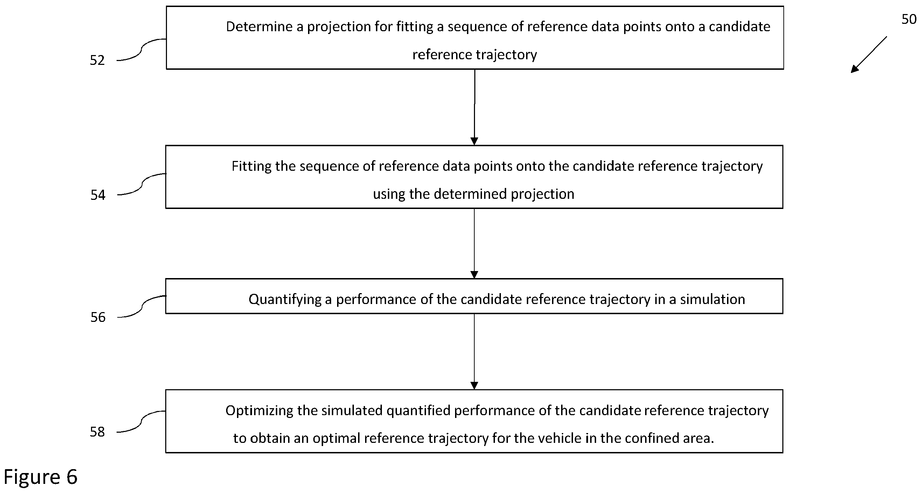

Figure 1 of the accompanying drawings illustrates schematically a confined environment or area 10, in other words a closed area, within which a computer-implemented method for optimizing a reference trajectory for an automated vehicle operating in a confined area such as that shown in Figure 6 which is describe in more detail later below.

In some embodiments of the method, a reference trajectory comprising on a sequence of reference data points for an automated vehicle operating in a confined area to follow is optimized by determining a projection of the sequence of reference data points for fitting the sequence of reference data points onto a candidate reference trajectory, wherein the projection smooths the fit of the sequence of reference data to a set of data points forming the candidate reference trajectory subject to one or more constraints, quantifying a performance of at least one vehicle task to be performed by the vehicle along the reference trajectory in a simulation of the candidate trajectory; and optimizing the quantified performance to obtain an optimal reference trajectory for the vehicle in the confined area. Figure 6 shows schematically an example embodiment of such a method which is describe in more detail later below as mentioned above.

Returning to Figure 1, within the confined area 10 a sequence of data points 16 have been acquired. The sequence of data points 16 can be used to establish a reference trajectory 18 for at least one vehicle 12 to follow within the confined area 10 which avoids any obstacles or objects such as object 14 shown in Figure 1. Examples of a confined area 10 for which an optimized trajectory for an automated vehicle may be found using the example methods disclosed herein comprise one or more of: a mining site, a port or harbour site, a construction site, a manufacturing site, a warehouse, factory or production site, an oil terminus site, an air-port terminus site, a lunar site, a surface-site, a below-surface site, for example, a subterranean site and/or a sea-floor site. The automated vehicles may comprise, for example, one or more of a construction machine, a truck with a semitrailer, or the like, which may be used for transportation of goods and/or passengers.

Operational tasks are assigned to such automated vehicles to perform on such sites. Once autonomously executed (in other words, performed without direct human oversight or control) task for such vehicles to perform is to follow one or more recorded trajectories (i.e., "reference trajectories") along on pre-specified routes in the material flow around the confined site.

The example trajectory illustrated in Figure 1 shows a closed site environment 10 where the sequence of data points 16 and a reference trajectory is sought that is close to the data points 16 yet avoids any undesirable elements, for example, other objects which may be stationary or moving, in the closed site. Examples of moving objects may include pedestrians and/or vehicles, which maybe automated, for which the position information can be determined at the time when the reference trajectory is generated.

The method of determining reference trajectories according to the disclosed embodiments simulates vehicle trajectories in the closed site using a motion-model based technique. The particular make and model of a vehicle for which a reference trajectory in the confined area is modelled in a simulation of the vehicle driving on the closed site, in other words, following the recorded data points of a reference trajectory which has already been generated. If the reference trajectory contains any errors or artefacts associated with a human driver operating the vehicle generating the reference trajectory and any other errors or artefacts, for example due to the weather, temperature or other environmental conditions when the reference trajectory was generated, these will be reflected in the path taken by the simulated vehicle trajectory.

The modelled motion of the vehicle can be represented by:

$$\mathbf{x}_{k+1} = \mathbf{F}(\mathbf{x}_k, \mathbf{u}_k), (1)$$

where $\mathbf{x}_k \in \mathbf{R}^n$ and $\mathbf{u}_k \in \mathbf{R}^m$ denotes the state and control-input vector, respectively, and $\mathbf{F}: \mathbf{R}^{n \times m} \to \mathbf{R}^n$ is the state transition function, in other words, how the state and control-input vectors progress over time as a modelled trajectory is followed by the modelled vehicle.

The state contains (but is not restricted to) the vehicle's configuration, containing the position, orientation and possibly articulation, and as such may represent a vehicle's pose, while the control-input typically is comprised of the steering wheel angle(s) and longitudinal acceleration/net-force/velocity. Given a recorded data sequence $\mathbf{y}^{\mathbf{r}} = \{\mathbf{y}_k^{\mathbf{r}}\}_0^M$, where $\mathbf{y}_k^{\mathbf{r}} = \mathbf{h}(\mathbf{x}_k^{\mathbf{r}}, \mathbf{u}_k^{\mathbf{r}})$, and $\mathbf{h}: \mathbf{R}^{n \times m} \to \mathbf{R}^q$ is the relation between the (not necessarily measured) vehicle state and control-input, $\mathbf{x}_k^{\mathbf{r}}, \mathbf{u}_k^{\mathbf{r}}$, to the measured output, the objective is to find sequences $\{\mathbf{x}_k\}_0^N, \{\mathbf{u}_k\}_0^N$ whose corresponding output sequence $\mathbf{y} = \{\mathbf{y}_k\}_0^N, \mathbf{y}_k = \mathbf{h}(\mathbf{x}_k, \mathbf{u}_k)$, is "close" to the recorded output data $\mathbf{y}^{\mathbf{r}}$.

The model seeks to find a balance or trade-off between the fidelity of the simulated output y and the recorded data $y^r$ so that one or more desirable characteristics of the simulated state and control-input sequences $\{x_k\}_0^N, \{u_k\}_0^N$ are retained.

One example of a desirable characteristic that the model seeks to retain in the trade-off is to increase the weight of (in other words to promote) small control inputs, where a small control input makes a small adjustment to a vehicle trajectory compared to a large control input. An example of a small control input comprises, for example, favouring going straight rather than following an oscillating pattern in the trajectory data.

Another example of a desirable characteristic that the model seeks to retain in the trade-off is to minimize path curvature to admit higher speeds for a given road friction, subject to any recorded limits on the vehicle configuration, due to e.g., obstacles, walls, or road-edges

The model generates a simulated state-sequence $\{x_k\}_k^N$ which accordingly includes, in some embodiments, more information than that was present in the reference trajectory being simulated, in other words the recorded data point set is enhanced with additional information by the simulation. As an example, in some embodiments, recorded trajectory data y including the position and orientation of the recording vehicle, $\{x_k\}_k^N$ could in addition contain data points representing vehicle characteristics such as articulation angle, steering-angle yaw-rate, along the recorded trajectory.

In order to remove unwanted artefacts from the simulated trajectory generated by the model, a numerical) optimal control problem (OCP). Typically, OCPs are formulated with specific tools, and solved using commercially available solvers. However, for the problem at hand, a difficult technical problem arises: The formulation relies on a discrete representation of the solution, c.f. (1). That is, the reference will be found as a sequence of vectors - $\{x_k\}_0^N$ one per unit of time or unit of space. The elements in this sequence needs to be related to the sequence of recorded data $y^r$. However, it is not possible to know a-priori which data-point should be related to which state vector in the reference trajectory. That is, when defining the proximity measure between the reference trajectory output $\{y_k\}_k^N$ and the recorded data $\{y_k^r\}_k^M$, one does not know which points in the two sequences should be compared to each other. This is known as an association problem which makes formulation and solution of this type of problem difficult.

The disclosed methods for optimizing a reference trajectory (x(t),u(t)) such as reference trajectory 18 shown in Figure 1 for an automated vehicle 12 operating in a confined area 10 handle this data association internally using a solver which does not require a-priori any relation between which specific optimization variables are to be related to which data points to be known and which does not require an iterative solution of several optimization problems to be performed.

Some embodiments of the method for optimizing a reference trajectory for an automated vehicle operating in a confined area, embed numerical projection operations within a set of constraints applied to the optimal control formulation. This advantageously also allows derivatives of the operations which are required by the solver to be readily obtained.

The method enables a candidate reference trajectory be fitted to recorded data. In particular, embodiments of the models used by the method constrain trajectories to comply with a specific vehicle's physical limitations, and the constraints may also model environmental effects such as low-friction conditions and road-banking.

Embodiments of the method use a motion model such as that given in equation (1) which may be derived in some embodiments from a set of ordinary differential equations of the following form or its mathematical equivalent:

$$x' = f(x, u), (2)$$

Here x' denotes derivative w.r.t. to the independent variable (in this context, time, or space). The solution for a given initial condition $x_0$ and control-input function u is the state trajectory x.

In some embodiments, equation (1) may take the following form or its mathematical equivalent:

$$x' = f(s, x, u)$$

where "s" implies that the model may explicitly depend on the vehicle's spatial location (or time), for example, some surfaces may have different levels of friction to others, for example, an asphalt road surface and a gravel road surface.

In a continuous setting, the optimal fitting of a simulated trajectory generated by (2) to the data-set $y^r$ is modelled by the following in some embodiments of the disclosed technology although other mathematically equivalent expressions may be used to describe the relationship between variables in other embodiments:

$$\min_{x(t), u(t), z} J(x(t), u(t), z) = \int_{T_{start}}^{T_{end}} l\big(x(t), u(t)\big)dt + \sum_{k=0}^{M} w_k z_k \qquad (3.a)$$

s. t.

$$\dot{x}(t) = f\big(x(t), u(t)\big) \qquad (3.b)$$

$$g\big(x(t), u(t)\big) \leq 0 \qquad (3.c)$$

$$z_k = \min_t \big\|h\big(x(t), u(t)\big) - y_k^r\big\|_W^2 \qquad k = 0, \dots, M \quad (3.d)$$

for $z = \{z_k\}_k^M$, and weights $W \in S_+^q, w_0, \dots, w_M$.

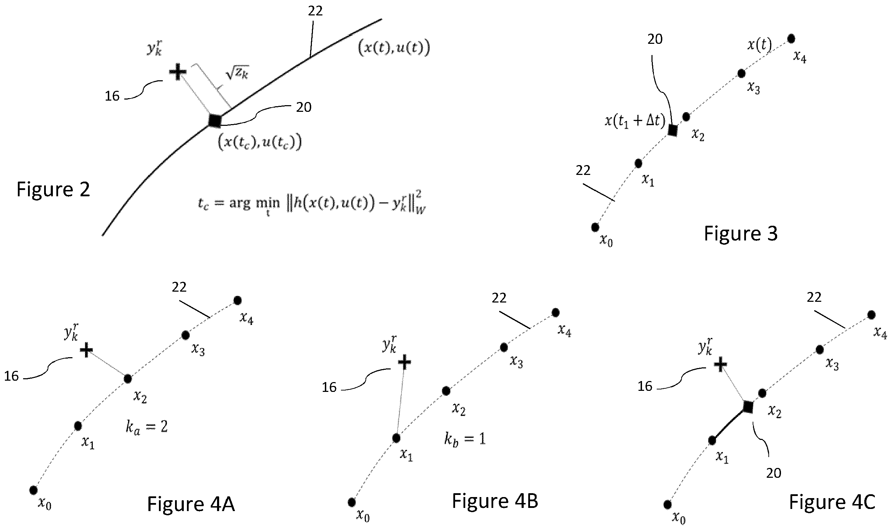

The purpose of solving problem (3) is to find the control-input u and initial conditions $x_0$ such that a state trajectory x results from (1) that minimizes the performance metric J while satisfying constraints (3.c). The performance metric contains, among other things, penalization of the "deviation-from-data" variables z, defined by the projection operation (3.d), as illustrated in Figure 2. Proper selection and/or tuning of the performance metric allows the user to control the characteristics of the optimized trajectory.

Figure 2 schematically illustrates a projection operation according to some embodiments of the disclosed technology; To be practically solvable, the infinite-dimensional optimal control problem (3) must be transcribed to a finite-dimensional optimization problem (i.e., "discretized"). This is typically, but not necessarily, done by prescribing a piece-wise constant input function u. Exemplifying with a case where time is the independent variable, it is such that

$$u(t) = u_k, t \in [t_k, t_{k+1}[\,, (4)$$

where $\{t_k\}_0^N, t_{k+1} > t_k$, is the "discretization-grid" and $\{u_k\}_0^N$ is the control-input parameters, which encode the control-input function u(t). Together with a numerical integrator, this choice enables (2) to be written as (1) and the functions x, u to be replaced by the sequences $\{x_k\}_0^N$, and $\{u_k\}_0^N$ respectively. This is standard procedure in numerical optimal control.

In order to find an optimized trajectory, however, the projection operation must be discretized, for example, by using a discretized projection operation.

The embodiments of the disclosed technology construct a continuous function x from sequences $\{x_k\}_0^N$ and $\{u_k\}_0^N$ using (2) and numerical integration. By way of example, in the expression below, a formulation is provide for the projection operation where time is the independent variable:

$$x(t) = x(t_k + \Delta t) = I(x_k, u_k, t_k, \Delta t) \approx x_k + \int_{t_k}^{t_k + \Delta t} f\big(x(\tau), u(\tau)\big)d\tau\,, \Delta t = t - t_k, k$$

$$= maxqs. tt_q \leq t, (5)$$

Any suitable approximate numerical procedure may be used to evaluate the integral, for example, a Runge-Kutta method. Importantly, this function can be differentiated w.r.t. $x_k$, $u_k$ and $\Delta t$ using so-called Algorithmic Differentiation (AD), and is continuous on the manifold defined by (1).

This gives that while the state and control functions x, u are substituted with the sequences $\{x_k\}_0^N$, and $\{u_k\}_0^N$ respectively, intermediate values can be reconstructed through (5). This is illustrated in Figure 3.

Figure 3 schematically illustrates how a continuous function x(t) is recreated according to some embodiments of the disclosed technology. In Figure 3: The continuous function x(t) is recreated by integrating the dynamics from the closest previous point on the discretization grid with (5). In the figure, the state and control-input of grid point t_1 is used to construct the value of x at some t=t_1+Δt<t_2. With this observation, the discrete projection operation can be implemented as a software routine, in other words, by a computer-implemented method such as method 50 described herein and exemplified by the example embodiment shown schematically in Figure 6 described in more detail later below.

In some embodiments, the discrete projection operation used by method 50 uses the following example algorithm, referred to herein as algorithm 1, or its computational equivalent. Algorithm 1 is set out pseudo-code below:

## Algorithm 1: Discrete projection

**Algorithm 1**: Discrete projection

Arguments: $y_k^r, \{x_k\}_0^N, \{u_k\}_0^N$

Returns: $z_k, \dfrac{\partial z_k}{\partial \{x_k\}_0^N}, \dfrac{\partial z_k}{\partial \{u_k\}_0^N}$

1. Find $k_a = \arg\min\limits_{q} \left\| h(x_q, u_q) - y_k^r \right\|_W^2$

2. Find $k_b = \arg\min\limits_{q} \left\| h(x_q, u_q) - y_k^r \right\|_W^2$ s.t. $q \neq k_a$

3. Let $q = \min(k_a, k_b)$

4. Solve the problem

$$z_k = \min\limits_{\Delta t} \left\| h(I(x_q, u_q, t_q, \Delta t), u_q) - y_k^r \right\|_W^2$$

5. Compute the derivatives

$$\frac{\partial z_k}{\partial \{x_k\}_0^N}, \frac{\partial z_k}{\partial \{u_k\}_0^N}$$

6. Return.

Figures 4A to 4C show schematically a discrete projection operation according to some embodiments of the disclosed technology by illustrating the principal steps of the algorithm. The state and input sequences {x_k }_0^N, and {u_k }_0^N are illustrated with round dots, the considered recorded data-point y_k^r as a cross, and the continuous function defined through (5) as the dashed line. Figure 4A shows schematically how Step 1 of the algorithm finds the stage in the sequences $\{x_k\}_0^N$, and $\{u_k\}_0^N$ that minimizes $\left\| h(x_q, u_q) - y_k^r \right\|$. In the figure, the latter corresponds to the length of the line. Figure 4B of the accompanying drawings show how step 2 of the algorithm finds the stage in the sequences $\{x_k\}_0^N$, and $\{u_k\}_0^N$ that gives the second smallest $\left\| h(x_q, u_q) - y_k^r \right\|$. Figure 4C of the drawings shows schematically how using the first of the two closest elements in the sequence as measured by $\left\| h(x_q, u_q) - y_k^r \right\|$ guarantees that the closest point on the continuous functions x(t), u(t) lies between. Finding the closest point on the function defined by integration of $x_q$, $u_q$ forward in t. The squared length of the solid line is $z_k$,

Steps 1 and 2 can be solved by brute computational force in some embodiments, however, in other embodiments, a more computationally efficient solution is obtained using a branch-and-bound type algorithm such as are known in the art, which can save computational resources such as the amount of energy used when executing the algorithm compared to a brute force method.

Step 4 is an unconstrained optimization problem in the variable $\Delta t$. In some embodiments, this is solved in a computationally efficient way by applying Newton's method on the derivative of the objective function to find its root. The derivatives needed to perform this operation are readily obtained by applying the chain rule and Algorithmic Differentiation of $I(x_q, u_q, t_q, \Delta t)$ which are both well-known mathematical techniques.

The derivatives in Step 5 of the algorithm can be computed using a number of known standard tools from parametric sensitivity analysis (for example, application of the implicit function theorem).

Alternatively, in some embodiments, the problem solved in step 4 can be computed by some simpler fixed-point iteration procedure or gridding, and the derivatives of step 5 computed with finite differences.

In some embodiments, the model solves the discrete problem by calculating a solution to the following expression, or its mathematical equivalent:

$$\min\limits_{\{x_k\}_0^N, \{u_k\}_0^N, z} \sum_{k=0}^{N-1} l(x_k, u_k) + \sum_{k=0}^{M} w_k z_k \qquad (6.a)$$

s. t.

$$x_{k+1} = F(x_k, u_k) \qquad\qquad k = 0, \ldots, N-1 \quad (6.b)$$

$$g(x_k, u_k) \leq 0 \qquad\qquad = 0, \ldots, N-1 \quad (6.c)$$

$$z_k = \text{DiP}\big(y_k^r, \{x_k\}_0^N, \{u_k\}_0^N\big) \qquad\qquad k = 0, \ldots, M \qquad (6.d)$$

In the above, $l(x_k, u_k)$ is the numerical integration of $l(x(t), u(t))$ over the interval, and DiP is Algorithm 1. There are several commercial/open-source solvers (e.g., IPOPT or Matlab's fmincon) which can be used to solve the above expression or a mathematical equivalent.

In some embodiments of the model, in order to formulate (6) in a form that a solver can accept, the model assembles the constraints (6.b)-(6.c) for a software routine that returns the function values for a given $\{x_k\}_0^N$, and $\{u_k\}_0^N$, and also returns the first and second order derivatives w.r.t. the same.

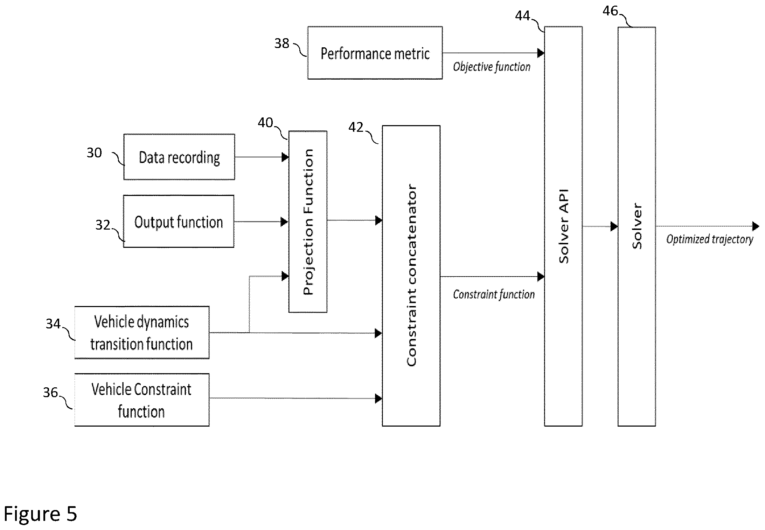

In some embodiments of the model, the performance metric need also be implemented as a software routine that gives the value of (6.a) for a given $\{x_k\}_0^N$, and $\{u_k\}_0^N$, together with the first and second order derivatives of the same. a. Figure 5 illustrates schematically an example functional software model configured to implement a method for optimizing a reference trajectory, e.g. (x(t),u(t)), for an automated vehicle operating in a confined area according to the disclosed embodiments, such as method 50 shown in Figure 6. In Figure 5, the software model architecture which is schematically illustrated shows the relationship between the software components of the model according to some embodiments of the invention as well as an example solver API and solver which are used by the model.

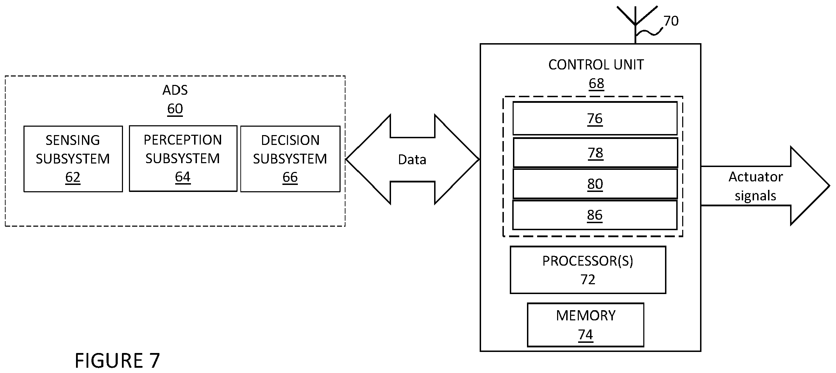

Some embodiments of the software model shown in Figure 5 are configured to implement a computer-implemented method 50 for optimizing a reference trajectory 18 for an automated vehicle 12 operating in a confined area 10 such as the method shown in Figure 6. The method represents a reference trajectory 18 using a sequence of reference data points 16, for example, the (x(t),u(t)) data points, which a vehicle 12 following the trajectory 18 around the closed area 10 can be guided to by the ADS 60 and control unit 68 of the vehicle. See the example ADS and control unit of an automated vehicle 12 which may be guided in this way which are shown schematically in Figure 7 and described later below. The method 50 represents the reference trajectory 18 by a sequence of reference data points 16 and comprises determining 52 a projection (see for example, the projections shown in Figure 4) of the sequence of reference data points for fitting 54 the sequence of reference data points onto a candidate reference trajectory. The projection smooths the fit of the sequence of reference data to a set of data points 20 forming the candidate reference trajectory 22 subject to one or more constraints. The performance of at least one vehicle task to be performed by the vehicle along the candidate reference trajectory is then quantified 56 using a simulation of the candidate trajectory. The quantified performance of the candidate reference trajectory is then optimized 58 to obtain an optimal reference trajectory for the vehicle in the confined area.

In the model shown in Figure 5, a data recording 30 of a reference trajectory and an output function 32 are input to a projection function 40 along with one or more constraints represented in the model of Figure 5 by a vehicle dynamics transition function 34 and a vehicle constraint function 36. An example of data recording comprises a GPS recordings of the vehicle's position , which may also in some embodiments include pose information such as, for example, orientation measurements such as roll, pitch, yaw. In the example where the data recording comprises GPS recordings, if the state is x and the GPS measurement is y, these variables relate as y = g(x). In the case the position is an explicit state, say x_1, it is simply y = x_1

The one or more constraints are also provided as input directly into a constraint concatenation model, shown as constraint concatenator 42 in Figure 5. The constraint concatenation module 42 generates a constraint function which is input to a solver API module 44 along with data representing an objective function, for example, a task the vehicle performs on the site whilst travelling along a trajectory, from a performance metric functional module 38.

The solver API module 44 and solver 46 may be any suitable type of API and solver which would be known to someone of ordinary skill in the art.

In some embodiments, the constraints include one or more of a set of one or more vehicle characteristics, one or more conditions of the confined area, for example, narrow paths, low hanging cables, other hazards, and or one or more environmental conditions of the confined area, for example, a ground surface condition such as muddy, slippery, sloping. Another example of a site or environmental condition is a stable ground condition indicator along the candidate reference trajectory and other examples include low-friction conditions and road-banking. Other example of an environmental conditions are heavy side winds that are often experienced after tunnel exits. Such conditions affect the ability of the vehicle to track the reference trajectory and therefore motivates the placement of the reference trajectory further from obstacles/road edges, when possible

In some embodiments, vehicle characteristics comprise one or more characteristics represented by a vehicle dynamics transition function 34 and/or a vehicle constraint function 36 in the model. In some embodiments, the vehicle characteristics comprise one or more characteristics representing a vehicle type, a minimum turning circle of the vehicle,

a fuel storage capacity of the vehicle, a vehicle weight, a dimension of the vehicle, a dimension of any trailer attached to the vehicle.

Various variations of the characteristics for a given "type of vehicle", for example, a "Truck", also exist in some embodiments. For example, axle configurations, how many axles are there, how many steerable etc., and/ or the type of trailer connection may also differ for different makes and/or models of the same vehicle type.

In some embodiments the projection function 40 of Figure 5 applies the constraints to smooth the fit of the candidate trajectory reference data to the sequence of reference data points subject to constraints based on a given type of vehicle operating in the confined area having at least one task objective whilst travelling along the optimized trajectory.

In some embodiments, the reference data points represent a recorded trajectory in the confined area.

In some embodiments of the method the optimization associates additional vehicle pose information with each recorded trajectory data point which is fitted to the optimal reference trajectory for the vehicle by the projection.

However, alternatively, in some embodiments, the reference data points are generated by drawing a trajectory on a map of the confined area.

In some embodiments, the vehicle is an articulated vehicle and the pose may be determined accordingly to show pose information for both a cab of the articulated vehicle and a trailer part or parts of the articulated vehicle

In some embodiments, the method 50 optimizes the performance of a plurality of candidate reference trajectories for the automated vehicle when it is operating in the confined area by optimizing the performance and constraining the end-points of the plurality of candidate trajectories so that at least one endpoint of one of the plurality of candidate trajectories matches in time and in position at least one end-point of another candidate trajectory of the plurality of quantified trajectories. For example, the method may optimize all of the quantified reference trajectory of the vehicle in the site simultaneously in some embodiments. Alternatively, the method can quantify the plurality of reference trajectories by optimizing the performance of each trajectory individually and then optimizing the end points of each individually optimized trajectory to match in time and position in some embodiments.

In some embodiments, the sequence of reference data points comprises a first data set of data points associated with a vehicle-specific position trace recorded within the confined area, and wherein the set of data points forming the candidate reference trajectory comprises a set of calculated data points obtained by using a plurality of discrete numerical projection operations to associate each data point of the recorded trajectory forming the first data set with its closest calculated point on the candidate reference trajectory, wherein the method further comprises modifying the candidate reference trajectory within the confined geographical area based on the constructed second data set.

In some embodiments, plurality of candidate reference trajectories collectively form a cyclical trajectory within the confined area 10.

Figure 7 illustrates schematically an example of an apparatus which may be configured to implement an on-board embodiment of a computer-implemented method 50 for optimizing a reference trajectory 18 for an automated vehicle 12 operating in a confined area 10 such as the method shown in Figure 6. As shown in Figure 8, the apparatus comprises a vehicle control system, also referred to as a control unit 68 of vehicle 12. In some embodiments, the control unit 28 comprises the arrangement depicted in Figure 7.

Figure 7 shows a schematic block diagram of embodiments of the control unit 88. The control unit 68 is arranged to communicate via at least one antenna 70. It should also be noted that, although not shown in Fig. 4, known conventional features of a control unit 28, such as, for example, an operating system, connection to a power source, e.g. a battery, or connections to brake or steering systems, e.g. on-board actuators or sensors for controlling the movement of the vehicle 12, may be assumed to be comprised in the control unit 28, but are not shown or described in any further detail in regards to Figure 7 for the sake of clarity.

The control unit 68 may comprise one or more processor(s) such as, for example, processing circuitry 72 and a memory 74 as shown in Figure 7. It should also be noted that some or all of the functionality described in the embodiments above as being performed by the control unit 68 may be provided by the processing circuitry 72 executing instructions stored on a computer-readable medium, such as, e.g. the memory 74 shown in Figure 7.

Figure 7 of the drawings shows schematically an ADS 60 and control unit 70 of an automated vehicle such as the vehicle shown in Figure 1. The control unit 70 is configured to generate actuator signals to guide the vehicle 12 along an optimized trajectory using localization information provided by the ADS 68 which it obtains using its sensory, perception, and decision subsystems 62, 64, 66. The control unit 68 may obtain the optimized trajectory information from a remote platform such as a back-office for the site, in embodiments where the method 50 is implemented off-board but in some embodiments, the method may be implemented on-board by the control unit 68.

As shown in Figure 7, the ADS of the vehicle is a separate component to the control system, meaning it may use one or more different resources from those used by the control system such as, for example, different memory, processing, or operating system resources in some embodiments. However, as will be apparent to anyone of ordinary skill in the art, the ADS 60 may also share one or more of the resources used by the control system shown as control unit 68 in Figure 7 in some other embodiments. The ADS is configured to send or otherwise share its tactical decisions with the control system of the vehicle so that, responsive to such decisions by the vehicle ADS, the control system can generate suitable actuator signals to control the operation of the vehicle.

The embodiments of the control unit 68 may comprise additional components, such as, for example, a module 76 configured to determine a projection for fitting a sequence of reference data points onto a candidate reference trajectory, a module 78 configured to fit the sequence of reference data points onto the candidate reference trajectory using the determined projection module 76, a module 80 configured to quantify a performance of the candidate reference trajectory in a simulation, and a module 82 configured to optimizing the simulated quantified performance of the candidate reference trajectory to obtain an optimal reference trajectory for the vehicle in the confined area . These modules are suitably configured to cooperate to allow the control unit to implement one or more embodiments of the method 50 described herein and may comprise one or more modules configured to provide dedicated functionality to support one or more of the method embodiments described herein.

In some embodiments of the control unit, the method implemented using a model configured to optimize a plurality of vehicle trajectories in a site simultaneously. Optimising all of the vehicle trajectories for a site simultaneously may use trajectory recordings which were concurrently captured in some embodiments, but in other embodiments, one or more of the trajectory recordings may be obtained separately. In some embodiments, the model provides a simultaneous solution of several optimal control problems by constraining trajectory end-points to match in time in order to optimize the constrained trajectories in the site, in other words to provide a full-site trajectory optimization.

Some embodiments of the model optimize a full site simultaneously as above but using bi-level optimization where a solution is nested. In the lower level of the bi-level optimization, each data recording is optimized individually. In the upper level of the bi-level optimization, the end-points for each optimized trajectory are optimized and continuity is enforced. This improves results and allows more parallelism and faster solve times than mono-level optimization. If trajectories on a site are being planned rather than dynamically adjusted in real-time, or in any other situations where the amount of down-time of one or more vehicles on the site is desirable to reduce, a full-site optimization may be preferable.

Some embodiments of the model optimize a site in a piecewise manner which models each trajectory recording separately. In some embodiments, continuity between the resulting model trajectories is imposed by constraining the end points of the model trajectories to have matching time-points or modelled time-stamps. In some embodiments of the model, the end-points are constrained using a selection logic, which selects from the trajectory recordings an order in which the recorded trajectories should modelled. These embodiments of the model may have results which are not as good as models which optimize a full site simultaneously but advantageously have shorter solve times. This means that if a vehicle needs to be replaced on a single trajectory in a site, this model may be preferable if the site down time is to be reduced.

The model described in the above embodiments has used data generated from recorded trajectories, however, in some embodiments of the above model, instead of using recorded trajectory data, an operator/engineer may manually draw a position trajectory/path on a map of the site. The model then optimizes a full-state and control input trajectory which tries to follow the drawn position trajectory. By removing some or all of the manual recordings with a test vehicle, especially if multiple sites have to be set up or if updates are needed for a site that is already operating autonomously, removing the need to use manual recordings of a human operated test vehicle is expected to result in significant cost savings.

It is also possible for some embodiments of the model to use trajectory data recorded from one type of vehicle, which may be a purpose-built recording vehicle, to generate the trajectories for a specific type of vehicle by mapping and adapting characteristics of the recording vehicle which may affect a vehicle trajectory to characteristics of a specific make and/or model of vehicle, which may be an articulated vehicle. For example, trajectory data from a reference vehicle may be adapted to provide model trajectories for different vehicles, for example vehicles such as cars and heavy duty vehicles, as well as for specific types of vehicles, for example, specific types of heavy duty vehicles such as construction machines including electrical construction machines, haulers, trucks, and tractor-semis which are operating on the site.

In some of the above disclosed embodiments of the method 50, the method optimizes trajectories of automated vehicles within a confined area, operating along pre-determined routes and removes the need for a confined area or site to be surveyed by first monitoring a vehicle driven by human operator which generates a record track or vehicle position trace that the automated vehicles are to follow when operating on the site. In some embodiments, such vehicle recordings are optimized by the invention so they are better references for an automated vehicle to follow in operation on the site as the artefacts retained as a result of sensor noise, disturbances and motion-patterns induced by the human data collection driver etc. are removed or reduced by implementing the optimization method. Another advantage of using the disclosed method of optimizing a referenced trajectory for a vehicle to follow in a closed area or site according to the disclosed embodiments is that some recording vehicles may not be equipped with sensors for all signals required by all of the automated vehicles, in other words the AV stack, which are intended to follow the reference trajectory in future. The method of optimizing a reference trajectory according to the disclosed embodiments according provides a method of constructing optimal reference trajectories from such corrupted and incomplete recorded data which can be vehicle specific for a number of different makes and models of AVs operating in a closed area or site.

The method has the potential to be used to reduce site-setup and maintenance cost, increase uptime and productivity. Consequently, the method has the potential to improve the overall performance of the automated vehicle fleet.

Some, if not all, of the above embodiments may be implemented using computer program code which may be provided as software or hardcoded, for example, as a computer program product configured to be used by a device mounted on or integrated in a vehicle. In some embodiments, the computer program product comprises computer-code which when executed by one or more processors of the vehicle, causes the vehicle to implement a method for optimizing a reference trajectory for an automated vehicle operating in a confined area, the reference trajectory comprising on a sequence of reference data points according to any one of the disclosed embodiments.

For example, the methods described above may be at least partly implemented through one or more processors, such as, the processors or processing circuitry 72 of the control system of the vehicle shown as control unit 68 depicted in Figure 7, together with computer program code for performing the functions and actions of the embodiments herein. The program code mentioned above may also be provided as a computer program product, for instance in the form of a data carrier carrying computer program code or code means for performing the embodiments disclosed herein when being loaded into the processing circuitry 72 in the control unit 68. The data carrier, or computer readable medium, may be one of an electronic signal, optical signal, radio signal or computer-readable storage medium. The computer program code may e.g. be provided as pure program code in the control unit 68 or on a server and downloaded to the control unit 68. Thus, it should be noted that the functions of the control unit 68 may in some embodiments be implemented as computer programs stored in memory 74, for example, a computer readable storage unit, for execution by processors or processing modules, e.g. the processing circuitry 72 in the control unit 68 of Figure 7.

Those skilled in the art will also appreciate that the processing circuitry 72 and the memory or computer readable storage unit 74 described above may refer to a combination of analog and digital circuits, and/or one or more processors configured with software and/or firmware, e.g. stored in a memory, that when executed by the one or more processors such as the processing circuitry 74 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The control unit 68 also comprises or is capable of controlling how signals are sent wirelessly via antenna 70 in order for the vehicle 12 to communicate via one or more communications channels with remote entities, for example, a site back office. The communication channels may be point-to-point, or networks, for example, over cellular or satellite networks which support wireless communications.

The wireless communications may conform to one or more public or proprietary communications standards, protocols and/or technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), and/or Instant Messaging and Presence Service (IMPS)), and/or Short Message Service (SMS)), or any other suitable communication protocol, including communication protocols not yet developed as of the filing date of this document.

The operating system of the vehicle may further various software components and/or drivers for controlling and managing general system tasks (e.g., memory management, storage device control, power management, etc.) and facilitates communication between various hardware and software components.

Where the disclosed technology is described with reference to drawings in the form of block diagrams and/or flowcharts, it is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements, features, functions, or steps than those listed and the words "a" or "an" preceding an element do not exclude the presence of a plurality of such elements, features, functions, or steps. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of methods, and may refer to elements, functions, steps or processes, one or more or all of which may be implemented in one aspect by a computer program product, embodied in a computer-readable medium, including computer-executable instructions, such as program code, executed by computers in networked environments.

A computer-readable medium may include removable and non-removable storage devices including, but not limited to, Read Only Memory (ROM), Random Access Memory, RAM), which may be static RAM, SRAM, or dynamic RAM, DRAM. ROM may be programmable ROM, PROM, or EPROM, erasable programmable ROM, or electrically erasable programmable ROM, EEPROM. Suitable storage components for memory may be integrated as chips into a printed circuit board or other substrate connected with one or more processors or processing modules, or provided as removable components, for example, by flash memory (also known as USB sticks), compact discs (CDs), digital versatile discs (DVD), and any other suitable forms of memory. Unless not suitable for the application at hand, memory may also be distributed over a various forms of memory and storage components, and may be provided remotely on a server or servers, such as may be provided by a cloud-based storage solution. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The memory used by any apparatus whatever its form of electronic apparatus described herein accordingly comprise any suitable device readable and/or writeable medium, examples of which include, but are not limited to: any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry. Memory may store any suitable instructions, data or information, including a computer program, software, an application including one or more of logic, rules, code, tables, etc. and/or other instructions capable of being executed by processing circuitry and, utilized by the apparatus in whatever form of electronic apparatus. Memory may be used to store any calculations made by processing circuitry and/or any data received via a user or communications or other type of data interface. In some embodiments, processing circuitry and memory are integrated. Memory may be also dispersed amongst one or more system or apparatus components. For example, memory may comprises a plurality of different memory modules, including modules located on other network nodes in some embodiments.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of protection being defined by the following claims.

**Claims**

1. A computer-implemented method for optimizing a plurality of reference trajectories for a plurality of different types of automated vehicle operating in a confined area, the plurality of reference trajectories comprising a sequence of reference data points, the method comprising for each reference trajectory:

   determining a projection of the sequence of reference data points for fitting the sequence of reference data points onto a candidate reference trajectory, wherein the projection smooths the fit of the sequence of reference data to a set of data points forming the candidate reference trajectory subject to one or more constraints;
   quantifying a performance of at least one vehicle task to be performed by the vehicle along the reference trajectory in a simulation of the candidate trajectory; and
   optimizing the quantified performance for each candidate reference trajectory to obtain an optimal reference trajectory for each vehicle in the confined area,
   wherein the plurality of optimal reference candidate trajectories collectively form a cyclical trajectory within the confined area.

2. The computer-implemented method of claim 1, wherein the one or more constraints include one or more of:

   a set of vehicle characteristics;
   site conditions of the confined area; and
   environmental conditions of the confined area.

3. The computer-implemented method of claim 2, wherein the set of vehicle characteristics comprise one or more characteristics representing:

   a vehicle type;
   a minimum turning circle of the vehicle;
   a fuel storage capacity of the vehicle;
   a vehicle weight;
   a dimension of the vehicle;
   a dimension of any trailer attached to the vehicle.

4. The computer-implemented method of either claim 2 or 3, wherein a site condition includes a ground condition along the candidate reference trajectory.

5. The computer-implemented method of any one of claims 2 to 4, wherein applying the constraints smooths the fit of the candidate trajectory reference data to the sequence of reference data points subject to constraints based on a given type of vehicle operating in the confined area having at least one task objective whilst travelling along the optimized cyclical reference trajectory.

6. The method of any one of claims 2 to 5, wherein the reference data points of the plurality of optimized reference trajectories represent a recorded cyclical trajectory in the confined area.

7. The method of claim 6, wherein the optimization associates additional vehicle pose information with each recorded trajectory data point which is fitted to the optimal reference trajectory for the vehicle by the projection.

8. The method of any one of previous claims 1 to 5, wherein the reference data points are generated by drawing a trajectory on a map of the confined area.

9. The method of any previous claim, wherein the vehicle is an articulated vehicle.

10. The method of any previous claim, wherein the method optimizes the performance of the plurality of candidate quantified reference trajectories for the automated vehicle when it is operating in the confined area by optimizing the performance and constraining the end-points of the plurality of candidate trajectories so that at least one endpoint of one of the plurality of candidate trajectories matches in time and in position at least one end-point of another candidate trajectory of the plurality of quantified trajectories

11. The method of claim 10, wherein the method optimizes all of the candidate quantified reference trajectories of the vehicle in the site simultaneously to form an optimized cyclical reference trajectory.

12. The method of claim 10, wherein the method quantifies the plurality of reference trajectories by optimizing the performance of each trajectory individually and then optimizing the end points of each individually optimized trajectory to match in time and position.

13. The method of any previous claim, wherein the sequence of reference data points comprises a first data set of data points associated with a vehicle-specific position trace recorded within the confined area, and wherein the set of data points forming each candidate reference trajectory comprises a set of calculated data points obtained by using a plurality of discrete numerical projection operations to associate each data point of the recorded trajectory forming the first data set with its closest calculated point on the candidate reference trajectory, wherein the method further comprises:
modifying the candidate reference trajectory within the confined geographical area based on the constructed second data set.

14. A control system or circuitry (68) for a vehicle (12) having an automated driving system, ADS, (60) the control system (68) comprising :

memory (74);
one or more processors (72); and
computer-program code which, when loaded from memory and executed by the one or more processors cause the control system (68) to implement a method as claimed in any one of claims 1 to 13, wherein the control system is further configured to generate one or more actuator signals to guide the vehicle along the optimized cyclical reference trajectory.

15. A computer program product configured to be used by a device mounted on or integrated in an automated vehicle, wherein the computer program product comprises computer-code which when loaded from memory and executed by one or more processors of the vehicle, causes the vehicle to implement a method according to any one of claims 1 to 13.

**Patentansprüche**

1. Computerimplementiertes Verfahren zum Optimieren einer Vielzahl von Referenztrajektorien für eine Vielzahl von unterschiedlichen Typen von automatisierten Fahrzeugen, die in einem begrenzten Bereich betrieben werden, wobei die Vielzahl von Referenztrajektorien eine Sequenz von Referenzdatenpunkten umfasst, wobei das Verfahren für jede Referenztrajektorie Folgendes umfasst:

Bestimmen einer Projektion der Sequenz von Referenzdatenpunkten zum Anpassen der Sequenz von Referenzdatenpunkten an eine in Frage kommende Referenztrajektorie, wobei die Projektion die Anpassung der Sequenz von Referenzdaten an einen Satz von Datenpunkten, der die in Frage kommende Referenztrajektorie bildet, unter einer oder mehreren Nebenbedingungen glättet;
Quantifizieren einer Leistung mindestens einer Fahrzeugaufgabe, die durch das Fahrzeug entlang der Referenztrajektorie in einer Simulation der in Frage kommenden Trajektorie durchzuführen ist; und
Optimieren der quantifizierten Leistung für jede in Frage kommende Referenztrajektorie, um eine optimale Referenztrajektorie für jedes Fahrzeug in dem begrenzten Bereich zu erlangen,
wobei die Vielzahl von optimalen in Frage kommenden Trajektorien zusammen eine zyklische Trajektorie innerhalb des begrenzten Bereichs bildet.

2. Computerimplementiertes Verfahren nach Anspruch 1, wobei die eine oder die mehreren Nebenbedingungen eines oder mehrere von Folgendem beinhalten:

einem Satz von Fahrzeugeigenschaften;
Standortbedingungen des begrenzten Bereichs; und
Umweltbedingungen des begrenzten Bereichs.

3. Computerimplementiertes Verfahren nach Anspruch 2, wobei der Satz von Fahrzeugeigenschaften eine oder mehrere Eigenschaften umfasst, die Folgendes darstellen:

einen Fahrzeugtyp;
einen minimalen Wendekreis des Fahrzeugs;
eine Kraftstoffspeicherkapazität des Fahrzeugs;
ein Fahrzeuggewicht;
eine Abmessung des Fahrzeugs;
eine Abmessung eines etwaigen Anhängers, der an dem Fahrzeug angebracht ist.

4. Computerimplementiertes Verfahren nach entweder Anspruch 2 oder 3, wobei eine Standortbedingung eine Bodenbedingung entlang der in Frage kommenden Referenztrajektorie beinhaltet.

5. Computerimplementiertes Verfahren nach einem der Ansprüche 2 bis 4, wobei das Anwenden der Nebenbedingungen die Anpassung der in Frage kommenden Trajektoriereferenzdaten an die Sequenz von Referenzdatenpunkten unter Nebenbedingungen glättet, die auf einem gegebenen Typ von Fahrzeug basieren, das in dem begrenzten Bereich betrieben wird und mindestens ein Aufgabenziel aufweist, während es entlang der optimierten zyklischen Referenztrajektorie fährt.

6. Verfahren nach einem der Ansprüche 2 bis 5, wobei die Referenzdatenpunkte der Vielzahl von optimierten Referenztrajektorien eine aufgezeichnete zyklische Trajektorie in dem begrenzten Bereich darstellen.

7. Verfahren nach Anspruch 6, wobei die Optimierung zusätzliche Fahrzeugposeninformationen mit jedem aufgezeichneten Trajektoriedatenpunkt assoziiert, der durch die Projektion an die optimale Referenztrajektorie für das Fahrzeug angepasst wird.

8. Verfahren nach einem der vorhergehenden Ansprüche 1 bis 5, wobei die Referenzdatenpunkte durch Zeichnen einer Trajektorie auf eine Karte des begrenzten Bereichs erzeugt werden.

9. Verfahren nach einem vorhergehenden Anspruch, wobei das Fahrzeug ein Gelenkfahrzeug ist.

10. Verfahren nach einem vorhergehenden Anspruch, wobei das Verfahren die Leistung der Vielzahl von in Frage kommenden quantifizierten Referenztrajektorien für das automatisierte Fahrzeug optimiert, wenn es in dem begrenzten Bereich betrieben wird, indem es die Leistung optimiert und die Endpunkte der Vielzahl von in Frage kommenden Trajektorien Nebenbedingungen unterwirft, sodass mindestens ein Endpunkt von einer der Vielzahl von in Frage kommenden Trajektorien hinsichtlich Zeit und Position mit mindestens einem Endpunkt einer anderen in Frage kommenden Trajektorie der Vielzahl von quantifizierten Trajektorien übereinstimmt

11. Verfahren nach Anspruch 10, wobei das Verfahren alle in Frage kommenden quantifizierten Referenztrajektorien des Fahrzeugs an dem Standort gleichzeitig optimiert, um eine optimierte zyklische Referenztrajektorie zu bilden.

12. Verfahren nach Anspruch 10, wobei das Verfahren die Vielzahl von Referenztrajektorien quantifiziert, indem es die Leistung jeder Trajektorie einzeln optimiert und dann die Endpunkte jeder einzeln optimierten Trajektorie optimiert, damit sie hinsichtlich Zeit und Position übereinstimmen.

13. Verfahren nach einem vorhergehenden Anspruch, wobei die Sequenz von Referenzdatenpunkten einen ersten Datensatz von Datenpunkten umfasst, der mit einer fahrzeugspezifischen Positionsspur assoziiert ist, die innerhalb des begrenzten Bereichs aufgezeichnet wird, und wobei der Satz von Datenpunkten, der jede in Frage kommende Referenztrajektorie bildet, einen Satz von berechneten Datenpunkten umfasst, der unter Verwendung einer Vielzahl von diskreten numerischen Projektionsvorgängen erlangt wird, um jeden Datenpunkt der aufgezeichneten Trajektorie, die den ersten Datensatz bildet, mit seinem nächsten berechneten Punkt auf der in Frage kommenden Referenztrajektorie zu assoziieren, wobei das Verfahren ferner Folgendes umfasst:
Modifizieren der in Frage kommenden Referenztrajektorie innerhalb des begrenzten geografischen Bereichs auf Grundlage des konstruierten zweiten Datensatzes.

14. Steuersystem oder -schaltung (68) für ein Fahrzeug (12), das ein automatisiertes Fahrsystem, ADS, (60) aufweist, wobei das Steuersystem (68) Folgendes umfasst:

Speicher (74);
einen oder mehrere Prozessoren (72); und
Computerprogrammcode, der, wenn er aus dem Speicher geladen und durch den einen oder die mehreren Prozessoren ausgeführt wird, das Steuersystem (68) dazu veranlasst, ein Verfahren nach einem der Ansprüche 1 bis 13 zu implementieren, wobei das Steuersystem ferner dazu konfiguriert ist, ein oder mehrere Aktorsignale zu erzeugen, um das Fahrzeug entlang der optimierten zyklischen Referenztrajektorie zu führen.

15. Computerprogrammprodukt, das dazu konfiguriert ist, durch eine Vorrichtung verwendet zu werden, die an einem automatisierten Fahrzeug montiert oder in dieses integriert ist, wobei das Computerprogrammprodukt Computercode umfasst, der, wenn er aus Speicher geladen und durch einen oder mehrere Prozessoren des Fahrzeugs ausgeführt wird, das Fahrzeug dazu veranlasst, ein Verfahren nach einem der Ansprüche 1 bis 13 zu implementieren.

**Revendications**

1. Procédé mis en œuvre par ordinateur pour optimiser une pluralité de trajectoires de référence pour une pluralité de types différents de véhicules automatisés fonctionnant dans une zone confinée, la pluralité de trajectoires de référence comprenant une séquence de points de données de référence, le procédé comprenant, pour chaque trajectoire de référence :

la détermination d'une projection de la séquence de points de données de référence pour ajuster la séquence de points de données de référence sur une trajectoire de référence candidate, dans lequel la projection lisse l'ajustement de la séquence de données de référence à un ensemble de points de données formant la trajectoire de référence candidate soumise à une ou à plusieurs contraintes ;
la quantification d'une performance d'au moins une tâche de véhicule devant être effectuée par le véhicule le long de la trajectoire de référence dans une simulation de la trajectoire candidate ; et
l'optimisation des performances quantifiées pour chaque trajectoire de référence candidate pour obtenir une trajectoire de référence optimale pour chaque véhicule dans la zone confinée,
dans lequel la pluralité de trajectoires candidates de référence optimales formant collectivement une trajectoire cyclique à l'intérieur de la zone confinée.

2. Procédé selon la revendication 1, dans lequel les une ou plusieurs actions comportent l'un ou plusieurs :

d'un ensemble de caractéristiques de véhicule ;
de conditions du site de la zone confinée ; et
de conditions environnementales de la zone confinée.

3. Procédé mis en œuvre par ordinateur selon la revendication 2, dans lequel l'ensemble de caractéristiques de véhicule comprend une ou plusieurs caractéristiques représentant :

un type de véhicule ;
un rayon de braquage minimum du véhicule ;
une capacité de stockage de carburant du véhicule ;
un poids de véhicule ;
une dimension du véhicule ;
une dimension de toute remorque attachée au véhicule.

4. Procédé mis en œuvre par ordinateur selon la revendication 2 ou 3, dans lequel une condition de site comporte une condition de sol le long de la trajectoire de référence candidate.

5. Procédé mis en œuvre par ordinateur selon l'une quelconque des revendications 2 à 4, dans lequel l'application des contraintes lisse l'ajustement des données de référence de trajectoire candidates à la séquence de points de données de référence soumis à des contraintes sur la base d'un type donné de véhicule fonctionnant dans la zone confinée ayant au moins un objectif de tâche tout en parcourant la trajectoire de référence cyclique optimisée.

6. Procédé selon l'une quelconque des revendications 2 à 5, dans lequel les points de données de référence de la pluralité de trajectoires de référence optimisées représentent une trajectoire cyclique enregistrée dans la zone confinée.

7. Procédé selon la revendication 6, dans lequel l'optimisation associe des informations supplémentaires sur la pose de véhicule à chaque point de données de trajectoire enregistré qui est adapté à la trajectoire de référence optimale pour le véhicule par la projection.

8. Procédé selon l'une quelconque des revendications précédentes 1 à 5, dans lequel les points de données de référence sont générés en traçant une trajectoire sur une carte de la zone confinée.

9. Procédé selon une quelconque revendication précédente, dans lequel le véhicule est un véhicule articulé.

10. Procédé selon une quelconque revendication précédente, dans lequel le procédé optimise les performances de la pluralité de trajectoires de référence quantifiées candidates pour le véhicule automatisé lorsqu'il fonctionne dans la zone confinée en optimisant les performances et en contraignant les points d'extrémité de la pluralité de trajectoires candidates de sorte qu'au moins un point final de l'une de la pluralité de trajectoires candidates correspond dans le temps et en position à au moins un point final d'une autre trajectoire candidate de la pluralité de trajectoires quantifiées.

11. Procédé selon la revendication 10, dans lequel le procédé optimise simultanément toutes les trajectoires de référence quantifiées candidates du véhicule dans le site pour former une trajectoire de référence cyclique optimisée.

12. Procédé selon la revendication 10, dans lequel le procédé quantifie la pluralité de trajectoires de référence en optimisant les performances de chaque trajectoire individuellement, puis en optimisant les points finaux de chaque trajectoire optimisée individuellement pour correspondre en termes de temps et de position.

13. Procédé selon une quelconque revendication précédente, dans lequel la séquence de points de données de référence comprend un premier ensemble de données de points de données associé à une trace de position spécifique au véhicule enregistrée dans la zone confinée, et dans lequel l'ensemble de points de données formant chaque trajectoire de référence candidate comprend un ensemble de points de données calculés obtenus en utilisant une pluralité d'opérations de projection numérique discrètes pour associer chaque point de données de la trajectoire enregistrée formant le premier ensemble de données à son point calculé le plus proche sur la trajectoire de référence candidate, dans lequel le procédé comprend en outre :
la modification de la trajectoire de référence candidate dans la zone géographique confinée sur la base du second ensemble de données construit.

14. Système de commande ou circuit (68) pour un véhicule (12) ayant un système de conduite automatisé, ADS, (60), le système de commande (68) comprenant :

une mémoire (74) ;
un ou plusieurs processeurs (72) ; et
un code de programme informatique qui, lorsqu'il est chargé depuis la mémoire et exécuté par les un ou plusieurs processeurs, amène le système de commande (68) à mettre en œuvre un procédé selon l'une quelconque des revendications 1 à 13, dans lequel le système de commande est en outre configuré pour générer un ou plusieurs signaux d'actionneur pour guider le véhicule le long de la trajectoire de référence cyclique optimisée.

15. Produit de programme informatique configuré pour être utilisé par un dispositif monté sur ou intégré dans un véhicule automatisé, dans lequel le produit de programme informatique comprend un code informatique qui, lorsqu'il est chargé à partir de la mémoire et exécuté par un ou plusieurs processeurs du véhicule, amène le véhicule à mettre en œuvre un procédé selon l'une quelconque des revendications 1 à 13.

Figure 1

Figure 2

$$t_c = \arg \min_t \left\| h(x(t), u(t)) - y_k^r \right\|_w^2$$

Figure 3

Figure 4A

Figure 4B

Figure 4C

EP 4 202 589 B1

Figure 5

Determine a projection for fitting a sequence of reference data points onto a candidate reference trajectory

Fitting the sequence of reference data points onto the candidate reference trajectory using the determined projection

Quantifying a performance of the candidate reference trajectory in a simulation

Optimizing the simulated quantified performance of the candidate reference trajectory to obtain an optimal reference trajectory for the vehicle in the confined area.

Figure 6

FIGURE 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10671075 B
- US 2018284768 A
- US 2019265714 A